## Europäisches Patentamt
## European Patent Office
## Office européen des brevets

(11) Veröffentlichungsnummer: **0 285 696**
B1

(12) # EUROPÄISCHE PATENTSCHRIFT

(45) Veröffentlichungstag der Patentschrift:
03.10.90

(51) Int. Cl.⁵: **F16F 13/00**, F16F 1/38

(21) Anmeldenummer: 87111223.1

(22) Anmeldetag: 04.08.87

(54) **Hülsengummifeder.**

(30) Priorität: 04.04.87 DE 3711424

(43) Veröffentlichungstag der Anmeldung:
12.10.88 Patentblatt 88/41

(45) Bekanntmachung des Hinweises auf die Patenterteilung:
03.10.90 Patentblatt 90/40

(84) Benannte Vertragsstaaten:
DE FR GB IT NL

(56) Entgegenhaltungen:
EP-A- 0 150 824
DE-A- 3 343 392
DE-A- 3 721 175
US-A- 4 717 111

PATENT ABSTRACTS OF JAPAN, Band 8,
Nr. 5 (M-267)[1442], 11. Januar 1984; &
JP-A-58 170 611 (TOYOTA JIDOSHA KOGYO
K.K.) 07-10-1983
PATENT ABSTRACTS OF JAPAN, Band 10,
Nr. 70 (M-462)[2127], 19. März 1986; &
JP-A-60 215 132 (BRIDGESTONE K.K.) 28-10-1985

(73) Patentinhaber: Firma Carl Freudenberg, Höhnerweg 2-4,
D-6940 Weinheim/Bergstrasse(DE)

(72) Erfinder: Schwerdt, Hans-Werner, Lortzingstrasse 4,
D-6947 Laudenbach(DE)

ACTORUM AG

## Beschreibung

Die Erfindung betrifft eine hydraulisch gedämpfte Hülsengummifeder, bestehend aus einem Innenrohr und einem dieses in einem Abstand umschliessenden Außenrohr aus Hartwerkstoffen, bei der in dem durch den Abstand gebildeten Spalt ein innen und außen haftend befestigter Gummikörper angeordnet ist, der wenigstens zwei in Krafteinleitungsrichtung hintereinanderliegende, durch eine Trennwand getrennte Kammern aufweist, die mit Flüssigkeit gefüllt und durch wenigstens eine Drosselöffnung verbunden sind, wobei die beiderseitigen Mündungen einen so großen Abstand von vorgelagerten Flächen haben, daß ein Rückstau von schwingungsbedingt austretenden Flüssigkeitsströme in der Mündung nicht meßbar ist, wobei des Innenrohr an wenigstens einer Stelle mit einer radialen Verdickung seiner Wandung versehen ist, die sich quer zur Krafteinleitungsrichtung erstreckt, wobei die Drosselöffnung in wenigstens einem Teilbereich ihrer axialen Erstreckung von der Verdickung in radialer Richtung ganz umschlossen ist und die beiderseitigen Mündungen der Drosselöffnung einen so großen Abstand von vorgelagerten Flächen haben, daß ein Rückstau schwingungsbedingt austretender Flüssigkeitsströme in die Mündungen nicht meßbar ist, wobei die Verdickung durch einen sich parallel zu der Hülsengummifeder erstreckenden Steg gebildet wird und wobei der Steg mittig in die Trennwand eingebettet ist.

Eine solche Hülsengummifeder ist aus der Figur 5 der JP-A 60 215 132 bekannt.

Der Erfindung liegt die Aufgabe zugrunde, eine Hülsengummifeder der vorgenannten Art derart weiterzuentwickeln, daß sich eine verbesserte Gebrauchsdauer ergibt und neben einer verbesserten Dämpfungswirkung die Möglichkeit, die Dämpfungswirkung an spezielle Erfordernisse des Anwendungsfalles besser anpassen zu können.

Diese Aufgabe wird erfindungsgemäss bei einer Hülsengummifeder der eingangs genannten Art dadurch gelöst, daß der Steg mittig in die Trennwand eingebettet ist und in Richtung der eingeleiteten Schwingungen durch spiegelbildlich geneigte Flächen begrenzt ist, die einander in einer sich parallel zur Hülsengummifeder erstreckenden Kante durchschneiden.

Dadurch, daß der Steg mittig in die Trennwand eingebettet und in Richtung der eingeleiteten Schwingungen durch spiegelbildlich geneigte Flächen begrenzt ist, die einander in einer sich parallel zu der Hülsengummifeder erstreckenden Kante durchschneiden, ist er quer zur Bewegungsrichtung in der von dem Innenrohr abgewandten Richtung in seinem Querschnitt verjüngt, wodurch die Trennwand im mittleren Bereich ihrer Dicke eine wesentlich verkürzte, absolute Länge zwischen dem Innenrohr und dem Außenrohr hat, bezogen auf den Bereich ihrer die beiden Kammern begrenzenden Oberflächen.

Bei einer schwingungsbedingten Relativverlagerung des Innenrohres ergibt sich dadurch im Bereich der Oberflächen eine Reduzierung der spezifischen Dehnung, was die dort vorhandenen Randspannungen deutlich reduziert und eine Verlängerung der Gebrauchsdauer bewirkt. Die Keilflächen schließen miteinander zweckmäßig einen Winkel von 60 bis 120° ein, vorteilhaft einen solchen von 80 bis 100°.

Sie durchschneiden und begrenzen einander an einer Kante, die zweckmäßig leicht gerundet ist, um auch an dieser Stelle das Auftreten kritischer Spannungsspitzen zu vermeiden.

Des weiteren ergibt sich eine Reduzierung der Ausbauchungselastizität der Trennwand, was bei Relativverlagerungen des Innenrohres eine verstärkte Hindurchpressung von Flüssigkeitsbestandteilen durch die Drosselöffnung zur Folge hat und eine dementsprechend verstärkte Dämpfungswirkung. Das Verhältnis aus der radialen Erstreckung des Steges und der radialen Erstreckung der Tennwand soll unter diesem Gesichtspunkt 0,1 bis 0,8 betragen, vorzugsweise 0,3 bis 0,65.

Die Drosselöffnung kann kanalartig ausgebildet sein und in diesem Falle ein Längen-/Durchmesserverhältnis von 2 bis 50 aufweisen, vorzugsweise ein solches zwischen 5 und 30. Insbesondere im Bereich niederfrequenter Schwingungen läßt sich hierdurch eine ausgezeichnete Dämpfungswirkung erzielen. Falls der Kanal ein Profil aufweist, das nicht kreisförmig begrenzt ist, wird die Ermittlung des Durchmessers anhand einer gedachten Kreisfläche von identischer Größe vorgenommen. Die Dämpfungswirkung erfährt eine weitere Steigerung, wenn die kanalartig ausgebildete Drosselöffnung in ihrem Verlauf wenigstens an einer Stelle sprunghaft ihre Richtung ändert, was beispielsweise der Fall ist, wenn die Drosselöffnung durch zwei ineinander übergehende Bohrungen gebildet wird, deren Achsen sich unter einem Winkel von 80 bis 170° durchschneiden, vorzugsweise unter einem solchen von 120 bis 150°.

Die kanalartig ausgebildeten Drosselöffnungen der vorstehend beschriebenen Art können an wenigstens einem Ende mit einem sich stetig erweiternden Mündungtrichter versehen sein, um in diesem Bereich Wirbelbildungen innerhalb des betriebsbedingt ein- und austretenden Flüssigkeitsvolumen zu verhindern.

Hierdurch wird dem Auftreten von Kavitationserscheinungen vorgebeugt, wobei optimale Ergebnisse erzielt werden, wenn die Mündungen der Form einer Venturidüse nachgebildet sind.

Des weiteren kann die Drosselöffnung wenigstens zwei die Kammern unabhängig voneinander verbindende Teilöffnungen umfassen, welche gegebenenfalls voneinander abweichende Querschnitte und/oder verschiedene Länge haben. Die insgesamt erzielte Dämpfungswirkung läßt sich hierdurch sehr präzise solchen Frequenzbereichen der eingeleiteten Schwingungen zuordnen, in welchen verwendungsbedingt ein bevorzugtes Bedürfnis nach einer guten Dämpfungswirkung besteht.

Der Gegenstand der vorliegenden Erfindung wird nachfolgend anhand der als Anlage beigefügten Zeichnung weiter verdeutlicht. Es zeigen:

Fig. 1 einen Querschnitt durch eine Hülsengummifeder nach der Erfindung,

Fig. 2 einen Längsschnitt durch die Buchse nach Fig. 1 entlang der Schnittlinie A–B,

Fig. 3 ein Diagramm, in dem die Dämpfungswirkung einer beispielhaften Ausführung der erfindungsgemäßen Hülsengummifeder dargestellt ist.

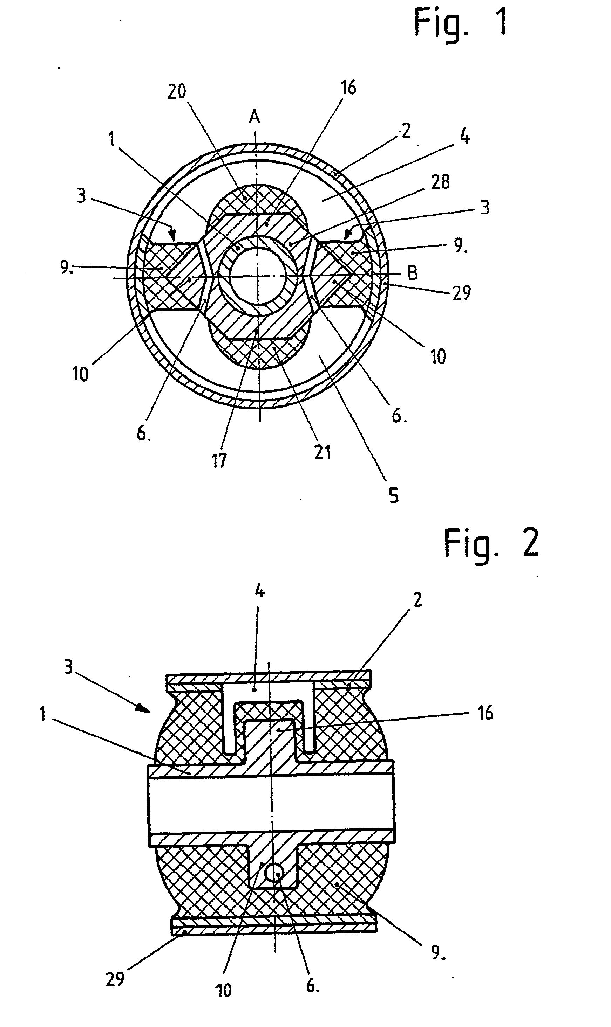

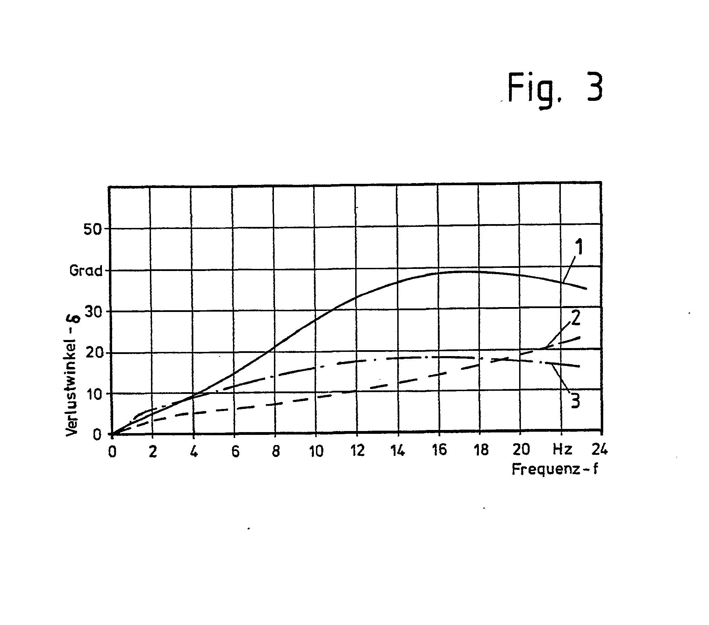

Wie aus Fig. 1 und 2 ersichtlich ist, besteht die hydraulisch dämpfende Hülsengummifeder aus einem Innenrohr 1 und einem Außenrohr 2, zwischen welche ein Gummikörper 3 einvulkanisiert ist. Das Innenrohr 1 ist in eine Bohrung eines Formkörpers 28 aus Metall oder einem steifen Kunststoff festsitzend eingefügt. Das Außenrohr 2 ist als Fensterrohr gestaltet und flüssigkeitsdicht von einem Stützrohr 29 umschlossen.

Axial in der Buchsenmitte 2 sind Kammern 4, 5 ausgespart, welche durch die elastische Trennwand 9, die einen Teil des Gummikörpers 3 bildet, voneinander getrennt sind. In diese Trennwand 9 hinein erstrecken sich radiale Verdickungen 10 des Innenrohres 1, welche stegartig gestaltet und einstückig an das Innenrohr angeformt sind.

Innerhalb der Trennwand 9 und den radialen Verdickungen 10 ist jeweils eine Drosselöffnung 6, 6' angeordnet, die durch jeweils einen Überströmkanal gebildet wird.

Die beiden Überströmkanäle 6, 6' haben einen voneinander abweichenden Durchmesser und eine übereinstimmende Länge. Durch sie kann bei radialer Auslenkung des Innenrohres 1 gegenüber dem Außenrohr 2 die Flüssigkeit mit exakt vorherbestimmbarem Strömungswiderstand zwischen den Kammern 4, 5 hin- und herströmen.

Je nach der Größe der in das Innenrohr eingeleiteten Kräfte und der gewünschten Dämpfung kann die Form und Größe der radialen Verdickungen 10 sowie der Trennwand 9 und der Überströmkanäle 6, 6' verändert werden.

In die obere und die untere Kammer 4, 5 der Hülsengummifeder ragt eine weitere Verdickung 16, 17 des Formkörpers 28 hinein, welche zusammen mit einer elastomeren Auflage 20, 21 unterschiedlicher Dicke die Anschlagseinrichtungen bilden.

Durch die unterschiedliche Form, Breite und Höhe der elastomeren Auflagen 20, 21 kann der Beginn und die Progressivität des Anschlages bei großen Amplituden bestimmt werden.

Die Begrenzung der radialen Auslenkung wird durch die Höhe der Verdickung 16, 17 des Innenrohres 1 festgelegt, welche wie Fig. 1 zeigt, einstückig mit dem Formkörper 28 verbunden ist.

Fig. 3 zeigt ein Diagramm, in welchem anhand einer durchgezogenen Linie der Verlustwinkel einer beispielhaften Ausführung der erfindungsgemäßen Hülsengummifeder über der dazugehörigen Frequenz aufgetragen ist. Er erreichte 39° bei einer Bauform, die unter Anlehnung an Fig. 1 und 2 einen maximalen Durchmesser von 60 mm bei einer axialen Länge von 55 mm aufwies. Es war eine einzige Drosselöffnung zwischen den Kammern 4 ,5 vorhanden, welche der Anschlußöffnung des Rohres 1 unmittelbar benachbart war und sich parallel zur Richtung der eingeleiteten Schwingungen erstreckte. Die Drosselöffnung war kanalartig ausgebildet und hatte bei einer Länge von etwa 10 mm einen Durchmesser von 3 mm.

Zu Vergleichszwecken wurde anschließend eine Vergleichsausführung untersucht, bei der die Drosselöffnung parallel zur Richtung der eingeleiteten Schwingungen mittig durch das Innenrohr 1 hindurchgeführt war und im Bereich der beiderseitigen Anschläge endete.

Es wurde ein Verlustwinkel erhalten, der in dem Diagramm anhand einer gestrichelten Linie 2 eingetragen worden ist. Er liegt deutlich unterhalb des als durchgezogene Linie 1 dargestellten Verlustwinkels der erfindungsgemäßen Ausführung.

Anschließend wurde der vorstehend beschriebene Versuch nochmals wiederholt unter Verwendung einer Hülsengummifeder, bei der die Kammern 4, 5 durch ein außen herumgelegtes Rohr verbunden waren, welches eine Öffnungsweite vom 3 mm aufwies. Der erhaltene Verlustwinkel wurde anhand des strichpunktierten Linienzuges 3 in das Diagramm eingetragen. Er ist ebenfalls deutlich schlechter als bei der erfindungsgemäßen Ausführung.

## Patentansprüche

1. Hydraulisch gedämpfte Hülsengummifeder, bestehend aus einem Innenrohr (1) und einem dieses in einem Abstand umschließenden Außenrohr (2) aus Hartwerkstoffen, bei der in dem durch den Abstand gebildeten Spalt ein innen und außen haftend befestigter Gummikörper (3) angeordnet ist, der wenigstens zwei in Krafteinleitungsrichtung hintereinanderliegende, durch eine Trennwand (9) getrennte Kammern (4, 5) aufweist, die mit Flüssigkeit gefüllt und durch wenigstens eine Drosselöffnung (6) verbunden sind, wobei das Innenrohr (1) an wenigstens einer Stelle mit einer radialen Verdickung (10) seiner Wandung versehen ist, die sich quer zur Krafteinleitungsrichtung erstreckt, wobei die Drosselöffnung (6) in wenigstens einem Teilbereich ihrer axialen Erstreckung von der Verdickung (10) in radialer Richtung ganz umschlossen ist, und die beiderseitigen Mündungen der Drosselöffnung (6) einen so großen Abstand von vorgelagerten Flächen haben, daß ein Rückstau schwingungsbedingt austretender Flüssigkeitsströme in den Mündungen nicht meßbar ist, wobei die Verdickung (10) durch einen sich parallel zu der Hülsengummifeder erstreckenden Steg gebildet wird und wobei der Steg mittig in die Trennwand (9) eingebettet ist, dadurch gekennzeichnet, dass der Steg in Richtung der eingeleiteten Schwingungen durch spiegelbildlich geneigte Flächen begrenzt ist, die einander in einer sich parallel zu der Hülsengummifeder erstreckenden Kante durchschneiden.

2. Hülsengummifeder nach Anspruch 1, dadurch gekennzeichnet, daß das Verhältnis aus der radialen Erstreckung des Steges und der radialen Erstreckung der Trennwand (9) 0,1 bis 0,8 beträgt, vorzugsweise 0,3 bis 0,65.

3. Hülsengummifeder nach einem der Ansprüche 1 bis 2, dadurch gekennzeichnet, daß die den Steg durchdringende Drosselöffnung (6) kanalartig ausgebildet ist und daß das Verhältnis aus Länge und Durchmesser 2 bis 50, vorzugsweise 5 bis 30 beträgt.

4. Hülsengummifeder nach Anspruch 3, dadurch gekennzeichnet, daß die Drosselöffnung (6) in ihrem Verlauf wenigstens eine sprunghafte Richtungsänderung aufweist.

5. Hülsengummifeder nach einem der Ansprüche 1 bis 4, dadurch gekennzeichnet, daß die Drosselöffnung (6) an wenigstens einem Ende mit einem sich stetig erweiternden Mündungstrichter (22) versehen ist.

6. Hülsengummifeder nach Anspruch 5, dadurch gekennzeichnet, daß der Mündungstrichter als Venturidüse ausgebildet ist.

7. Hülsengummifeder nach Anspruch 1 bis 6, dadurch gekennzeichnet, daß die Drosselöffnung (6) wenigstens zwei die Kammern (4, 5) unabhängig voneinander verbindende Teilöffnungen umfaßt.

8. Hülsengummifeder nach Anspruch 7, dadurch gekennzeichnet, daß die Teilöffnungen einen voneinander verschiedenen Querschnitt und/oder eine voneinander verschiedene Länge haben.

## Revendications

1. Ressort à douille à caoutchouc à amortissement hydraulique constitué d'un tube intérieur (1) et d'un tube extérieur (2) en matériaux durs entourant le précédent à une certaine distance, dans lequel un corps en caoutchouc (3) est disposé dans le jeu formé par cette distance et est fixé par adhésion à l'intérieur et à l'extérieur, ce corps présentant au moins deux chambres (4, 5) séparées par une cloison séparatrice (9) et disposées l'une derrière l'autre en direction de la transmission des forces, ces chambres étant remplies de liquide et connectées par au moins un orifice de réglage (6), tandis que le tube intérieur (1) est pourvu, au moins en un point, d'une surépaisseur radiale (10) de sa paroi qui s'étend transversalement par rapport à la direction de transmission des forces, tandis que l'orifice de réglage (6) est entièrement entouré en direction radiale, sur au moins une partie de son extension axiale, par la surépaisseur (10) et que les embouchures des deux côtés de l'orifice de réglage (6) ont une distance suffisamment grande par rapport aux surfaces opposées, qu'une retenue des écoulements de liquide dans les embouchures provoquée par les vibrations n'est pas mesurable, tandis que la surépaisseur( 10) est constituée par une nervure s'étendant parallèlement au ressort à douille en caoutchouc et tandis que la nervure est insérée au milieu dans la cloison séparatrice (9), caractérisé en ce que la nervure est délimitée en direction des vibrations induites par des surfaces à inclinaison symétrique qui ont une intersection formant une arête parallèle au ressort à douille en caoutchouc.

2. Ressort à douille en caoutchouc selon la revendication 1, caractérisé en ce que le rapport de l'extension radiale de la nervure et de l'extension radiale de la cloison séparatrice (9) est compris entre 0,1 et 0,8 et, de préférence, entre 0,3 et 0,65.

3. Ressort à douille en caoutchouc selon l'une des revendications 1 à 2, caractérisé en ce que l'orifice de réglage (6) traversant la nervure se présente sous forme de canal et en ce que le rapport de sa longueur à son diamètre est compris entre 2 et 50 et, de préférence, entre 5 et 30.

4. Ressort à douille en caoutchouc selon la revendication 3, caractérisé en ce que l'orifice de réglage (6) présente sur son parcours au moyen une modification brusque de direction.

5. Ressort à douille en caoutchouc selon l'une des revendications 1 à 4, caractérisé en ce que l'orifice de réglage (6) est pourvu, à au moins une extrémité, d'une embouchure en entonnoir (22) s'élargissant progressivement.

6. Ressort à douille en caoutchouc selon la revendication 5, caractérisé en ce que l'embouchure en entonnoir se présente sous forme d'une tuyère à venturi.

7. Ressort à douille en caoutchouc selon les revendications 1 à 6, caractérisé en ce que l'orifice de réglage (6) comprend au moins deux orifices partiels connectant les deux chambres (4, 5) indépendamment l'un de l'autre.

8. Ressort à douille en caoutchouc selon la revendication 7, caractérisé en ce que les orifices partiels ont des sections différentes l'une de l'autre et/ou des longueurs différentes l'une de l'autre.

## Claims

1. A hydraulically damped sleeve-type rubber spring, composed of an inside tube (1) and an outside tube (2) surrounding said inside tube with a spacing and made of hard materials, in which spring a rubber body (3), attached by adhesion on the inside and the outside, is arranged in the gap formed by the spacing, which rubber body has at least two chambers (4, 5) located one beyond the other in the direction of the introduction of force and separated by a partition (9), which chambers are filled with liquid and are connected by at least one throttle opening (6), the inside tube (1) being provided in at least one place with a radial thickening (10) of its wall, which thickening extends transversely to the direction of the introduction of force, the throttle opening (6) being completely surrounded in the radial direction by the thickening (10) in at least one partial area of its axial extension and the orifices on both sides of the throttle opening (6) having such a large spacing from upstream surfaces that a back pressure of liquid flows emerging due to vibration is not measurable in the orifices, the thickening (10) being formed by a web extending parallel to the sleeve-type rubber spring, and the web being embedded in the middle of the partition (9), characterized in that the web is bounded in the direction of the introduced vibrations by mirror-inverted inclined surfaces which intersect in an edge extending parallel to the sleeve-type rubber spring.

2. A sleeve-type rubber spring according to claim 1, characterized in that the ratio of the radial extension of the web to the radial extension of the partition (9) is 0.1 to 0.8, preferably 0.3 to 0.65.

3. A sleeve-type rubber spring according to any of claims 1 to 2, characterized in that the throttle opening (6) penetrating the web is of channel-like construction, and in that the ratio of length to diameter is 2 to 50, preferably 5 to 30.

4. A sleeve-type rubber spring according to claim 3, characterized in that the throttle opening (6) has at least one sharp change in direction during its course.

5. A sleeve-type rubber spring according to any of claims 1 to 4, characterized in that the throttle opening (6) is provided on at least one end with an orifice funnel (22) which widens continuously.

6. A sleeve-type rubber spring according to claim 5, characterized in that the orifice funnel is constructed as a Venturi tube.

7. A sleeve-type rubber spring according to any of claims 1 to 6, characterized in that the throttle opening (6) comprises at least two partial openings connecting the chambers (4, 5) independently of each other.

8. A sleeve-type rubber spring according to claim 7, characterized in that the partial openings have a mutually different cross-section and/or a mutually different length.

EP 0 285 696 B1

Fig. 1

Fig. 2

Fig. 3